# EUROPÄISCHE PATENTSCHRIFT

(11) **EP 1 851 445 B1**
(45) Veröffentlichungstag und Bekanntmachung des Hinweises auf die Patenterteilung: **25.06.2008**
(21) Anmeldenummer: 06707029.2
(22) Anmeldetag: 17.02.2006
(51) Int. Cl.: F15B 7/10

(54) **HYDRAULIKANTRIEB, INSBESONDERE FÜR ZWEIZYLINDER-DICKSTOFFPUMPEN**
HYDRAULIC DRIVE, ESPECIALLY FOR TWO-CYLINDER THICK MATTER PUMPS
ENTRAINEMENT HYDRAULIQUE, NOTAMMENT POUR POMPES A LIQUIDES EPAIS A DEUX CYLINDRES

(30) Priorität: 22.02.2005 DE 102005008217
(43) Veröffentlichungstag der Anmeldung: 07.11.2007
(73) Patentinhaber: Putzmeister Concrete Pumps GmbH, 72631 Aichtal (DE)
(72) Erfinder: VON BÄUMEN, Paul, 71069 Sindelfingen (DE); HÖVEMEYER, Dirk, 72581 Dettingen (DE); RENZ, Hans, 70794 Filderstadt (DE)
(74) Vertreter: WOLF & LUTZ
(86) Internationale Anmeldenummer: PCT/EP2006/001432
(87) Internationale Veröffentlichungsnummer: WO 2006/089688

(56) Entgegenhaltungen:
- DE-A1- 10 150 467
- US-A- 5 344 290
- US-B1- 6 481 202
- PATENT ABSTRACTS OF JAPAN Bd. 009, Nr. 103 (M-377), 8. Mai 1985 (1985-05-08) & JP 59 226288 A (KYOKUTO KAIHATSU KOGYO KK), 19. Dezember 1984 (1984-12-19)

## Beschreibung

Die Erfindung betrifft einen Hydraulikantrieb, insbesondere für Zweizylinder-Dickstoffpumpen der im Oberbegriff des Anspruchs 1 angegebenen Gattung.

Ein solche Hydraulikantrieb ist in JP 59226288 offenbart.

Bekannte Hydraulikantriebe dieser Art weisen mindestens eine als hydraulische Verstellpumpe ausgebildete Hauptpumpe sowie zwei hydraulisch betätigbare, als Kolben-Zylindereinheiten ausgebildete Antriebszylinder auf. Die Antriebszylinder sind über an ihrem einen Ende angeordnete Pumpenanschlüsse unter Bildung eines geschlossenen Hydraulikkreises mit je einem von zwei Anschlusssträngen der Hauptpumpe verbunden, während sie an ihren den Pumpenanschlüssen gegenüberliegenden Ende über eine Schaukelölleitung miteinander kommunizieren. Die als Verstellpumpe ausgebildete Hauptpumpe ist außerdem mit einem Steuermechanismus zum alternierenden Umsteuern der Förderrichtung unter abwechselndem gegensinnigem Aufbau eines Hochdrucks und eines vorgespannten Niederdrucks in den beiden Anschlusssträngen verbunden. Weiter ist eine hydraulische Speisepumpe vorgesehen, deren Saugeingang an einen Öltank angeschlossen ist und deren Druckausgang auf Niederdruck-Niveau begrenzt ist und über je ein Rückschlagventil in die beiden Anschlussstränge der Hauptpumpe mündet. Da sich das Hydrauliköl beim Pumpvorgang aufheizt, ist zusätzlich ein Spülzweig vorgesehen, der austrittsseitig über ein Druckbegrenzungsventil in den Öltank mündet und eintrittsseitig jeweils mit dem Niederdruckteil des Hydraulikkreises verbindbar ist. Zu diesem Zweck befindet sich im Spülzweig ein durch den zwischen den Anschlusssträngen der Hauptpumpe herrschenden Differenzdruck vorgesteuertes Wechselventil, das bei vorhandenem Differenzdruck zum jeweils niederdruckseitigen Anschlussstrang unter Ausschleusen eines Spülstroms in den Öltank durchgesteuert und in seiner differenzdruckneutralen Mittellage gesperrt ist. Die beim Spülvorgang ausgeschleuste Ölmenge entspricht etwa 50 bis 70 % der über die Speisepumpe aus dem Öltank ständig nachgeförderten Ölmenge. Aufgrund von Massenträgheiten und von Kompressibilitäten ergeben sich innerhalb des Hydrauliksystems beim Umschaltvorgang der Verstellpumpe erhebliche Druckschwankungen. Beim Umsteuervorgang wird der Schwenkwinkel der Verstellpumpe zurückgenommen. Dabei wird die Volumenaufnahme der Verstellpumpe geringer. Da das System noch eingespannt ist, baut sich der Hochdruck ab, während in gleichem Maße der Niederdruck ansteigt. Das bedeutet, dass die Niederdruckseite einen sehr raschen Druckanstieg erfährt, solange das Wechselventil im Spülkreis noch nicht umgesteuert ist. Dies führt zu einem extremen Spülölausstoß aus der bisherigen Niederdruckseite des Hauptkreises, so dass im Zuge des erneuten Druckaufbaus auf der Hochdruckseite der Druck auf der Niederdruckseite innerhalb von Bruchteilen von Sekunden völlig einbrechen kann. Die Speisepumpe vermag in diesem Zustand nicht die über den Spülkreis ausgespülte Spülmenge zu kompensieren und nachzufüllen. Durch die Unterversorgung auf der Niederdruckseite kommt es zu Pumpenschlägen und zur Kavitation sowohl bei der Speisepumpe als auch bei der Hauptpumpe mit der Gefahr eines erhöhten Verschleißes. Um diesen Nachteil zu vermeiden, ist bereits vorgeschlagen worden, das zu wenig vorhandene Öl über einen Druckspeicher oder eine größere Speisepumpe zur Verfügung zu stellen. Beide Lösungen erfordern aber einen unerwünscht hohen baulichen Aufwand. -

Ausgehend hiervon liegt der Erfindung die Aufgabe zugrunde, Vorkehrungen zu treffen, die dafür sorgen, dass Niederdruckeinbrüche in Hydraulikantrieben mit geschlossenem Hydraulikkreis der eingangs angegebenen Art während des Umsteuervorgangs mit einfachen Mitteln vermieden werden.

Zur Lösung dieser Aufgabe werden die in den Ansprüchen 1 und 11 angegebenen Merkmalskombinationen vorgeschlagen. Vorteilhafte Ausgestaltungen und Weiterbildungen der Erfindung ergeben sich aus den abhängigen Ansprüchen. Die erfindungsgemäße Lösung geht vor allem von dem Gedanken aus, dass der über den Hydraulikkreis ausgeschleuste Spülölstrom während eines jeden Umsteuervorgangs der Verstellpumpe unabhängig von der Druckdifferenz in den Anschlusssträngen der Hauptpumpe zeitweilig gesperrt und anschließend wieder freigegeben wird. Um dies zu erreichen, wird gemäß der Erfindung ein zusätzlicher Absperrmechanismus vorgeschlagen, der den Spülölstrom während des Umsteuervorgangs der Hauptpumpe unabhängig vom Differenzdruck zwischen den Anschlusssträngen sperrt.

Der Absperrmechanismus spricht dabei zweckmäßig auf ein die Umsteuerung der Hauptpumpe auslösendes Steuersignal an. Eine bevorzugte Ausgestaltung der Erfindung sieht vor, dass an mindestens zwei Enden der Antriebszylinder auf einen Kolbendurchgang ansprechende Positionsgeber zur Abgabe der Steuersignale angeordnet sind. Danach wird der Absperrmechanismus zeitverzögert nach. Ablauf des Umsteuervorgangs wieder deaktiviert. Dies bedeutet, dass der Absperrmechanismus beispielsweise auf ein Zeitverzögerungsglied oder ein im Anschluss an einen Umsteuervorgang der Hauptpumpe erzeugtes Steuersignal unter Deaktivierung der Sperrung anspricht.

Eine bevorzugte Ausgestaltung der Erfindung sieht vor, dass der Absperrmechanismus ein in der Spülölleitung hinter dem Spülöl-Druckbegrenzungsventil angeordnetes, vorzugsweise in Öffnungsrichtung federbelastetes Einwege-Absperrventil aufweist. Grundsätzlich ist es auch möglich, dass der Absperrmechanismus ein in der Spülölleitung zwischen dem Wechselventil und dem Spülöl-Druckbegrenzungsventil angeordneten Einwege-Absperrventil aufweist.

Eine dritte Lösungsvariante sieht vor, dass der Absperrmechanismus ein im der Spülzweig vor dem Wechselventil angeordnetes Zweiwege-Absperrventil aufweist.

Grundsätzlich ist es ferner möglich, dass der Absperrmechanismus je ein in den beiden mit den Anschlusssträngen verbundenen Vorsteuerleitungen des Wechselventils angeordnetes Druckentlastungsventil aufweist. Die Druckentlastungsventile werden bei der Ansteuerung gleichzeitig in ihre Entlastungsstellung geschoben, so dass der Vorsteuerdruck am Wechselventil gegen den Tank entlastet wird. In diesem Fall steht auf beiden Seiten des Wechselventils der gleiche Druck an, so dass der Ventilschieber über eine Federzentrierung in seine Mittelstellung gebracht und dabei der Spülzweig gesperrt wird.

Im Folgenden wird die Erfindung anhand der in der Zeichnung dargestellten Ausführungsbeispiele näher erläutert. Es zeigen
- Fig. 1: ein Schaltschema einer Antriebshydraulik für eine Zweizylinder-Dickstoffpumpe mit geschlossenem Hydraulikkreis und integriertem Spülzweig gemäß vorbekanntem Stand der Technik;
- Fig. 2: ein Schaltschema einer Antriebshydraulik entsprechend Fig. 1 mit einer ersten Absperrvariante im Spülzweig;
- Fig. 3: ein Schaltschema einer Antriebshydraulik entsprechend Fig. 1 mit einer zweiten Absperrvariante im Spülzweig;
- Fig. 4: ein Schaltschema einer Antriebshydraulik entsprechend Fig. 1 mit einer dritten Absperrvariante im Spülzweig;
- Fig. 5: ein Schaltschema einer Antriebshydraulik entsprechend Fig. 1 mit einer vierten Absperrvariante im Spülzweig;
- Fig. 6: ein Messdiagramm für einige Zustandsgrößen einer Antriebshydraulik gemäß Fig. 1 (Stand der Technik) während des Umsteuervorgangs der Hauptpumpe in Abhängigkeit von der Zeit;
- Fig. 7: ein Messdiagramm für einige Zustandsgrößen einer Antriebshydraulik gemäß Fig. 2 (Erfindung) während des Umsteuervorgangs in Abhängigkeit von der Zeit.

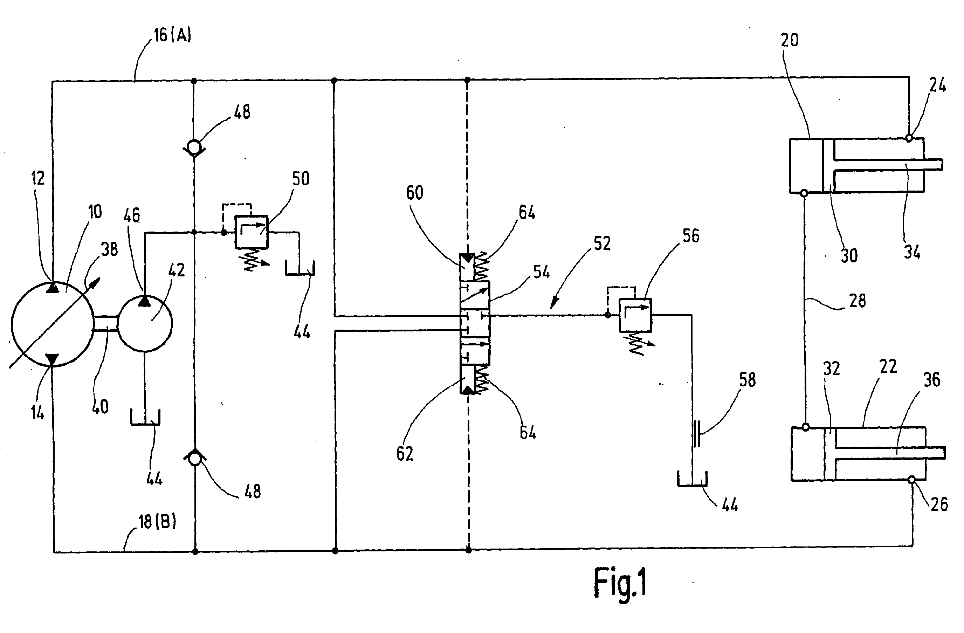

Die Figuren 1 bis 5 zeigen einen Basisschaltplan einer Antriebshydraulik für Zweizylinder-Dickstoffpumpen mit geschlossenem Hydraulikkreis und einem Spülzweig.

Die Basisschaltung umfasst eine als Reversier- oder Verstellpumpe ausgebildete hydraulische Hauptpumpe 10, an deren Ausgänge 12,14 über je einen Anschlussstrang 16,18 ein als Kolben-Zylinder-Einheit ausgebildeter Antriebszylinder 20,22 angeschlossen ist. Bei den gezeigten Ausführungsbeispielen befinden sich die Pumpenanschlüsse 24,26 jeweils am stangenseitigen Ende der Antriebszylinder. An den gegenüberliegenden bodenseitigen Enden sind die Antriebszylinder über eine Schaukelölleitung 28 miteinander verbunden. Die Kolben-30,32 mit den zugehörigen Kolbenstangen 34,36 der Antriebszylinder 20,22 werden über die Hauptpumpe 10 abwechselnd gegensinnig angetrieben. Dazu wird eine Schwenkscheibe 38 der Hauptpumpe über einen nicht dargestellten hydromechanischen oder elektromechanischen Steuermechanismus innerhalb der Hauptpumpe so alternierend umgesteuert, dass die Hochdruckseite und die vorgespannte Niederdruckseite während eines jeden Umsteuervorgangs vom einen zum anderen Ausgang 12,14 wechselt. Dies bedeutet, dass die Anschlussstränge 16,18 abwechselnd mit Hochdruck (HD) und mit vorgespanntem Niederdruck (ND) beaufschlagt sind.

Der Hydraulikkreis enthält ferner eine über die gleiche Antriebswelle 40 wie die Hauptpumpe 10 motorisch angetriebene Speisepumpe 42, deren Saugseite mit einem Öltank 44 und deren Druckseite 46 über Einspeise-Rückschlagventile 48 in die Anschlussstränge 16,18 münden. Die Druckseite 46 der Speisepumpe 42 wird außerdem über ein Druckbegrenzungsventil 50 auf Niederdruckniveau (z.B. 34 bar) gehalten. Die Speisepumpe hat somit die Aufgabe, auf der Niederdruckseite des geschlossenen Hydraulikkreises eine Vorspannung aufrecht zu erhalten, die bewirkt, dass die Hauptpumpe 10 niederdruckseitig stets mit Hydrauliköl versorgt wird.

Die Basisschaltungen nach Fig. 1 bis 5 enthalten ferner einen Spülzweig 52, der eingangsseitig über ein Wechselventil 54 an die Anschlussstränge 16,18 angeschlossen ist und über ein Niederdruckbegrenzungsventil 56 und einen Wärmeaustauscher 58 eines Kühlaggregats in den Öltank 44 mündet. Das als 3/3-Wegeventil ausgebildete Wechselventil 54 steht über seine Vorsteuereingänge 60,62 so mit den Anschlusssträngen 16,18 in Verbindung, dass sein Schieber über den herrschenden Differenzdruck (Δp = HD - ND) zur jeweiligen Niederdruckseite hin durchgesteuert wird. In einem speziellen Fall wird ein solcher Schieber mit einer Differenzdruck von etwa 4 bar entgegen der Kraft der Zentrierfedern 64 umgesteuert. Das Druckbegrenzungsventil 56 im Spülzweig 52 befindet sich ebenfalls etwa auf Niederdruckniveau. Die Druckeinstellung dort liegt beispielhaft um etwa 4 bar niedriger als im ND-Begrenzungsventil der Speisepumpe 42.

Im differenzdruckneutralen Bereich innerhalb der 4-bar-Grenze schaltet das Wechselventil 54 auf seine Mittellage, die als Sperrstellung des Spülzweigs zu beiden Anschlusssträngen 16,18 ausgebildet ist.

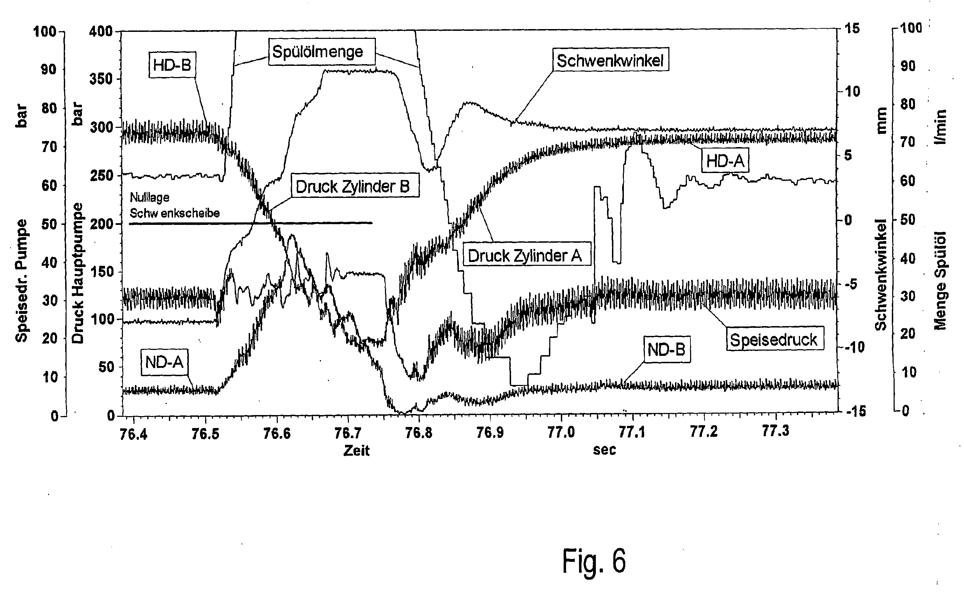

Das Messdiagramm gemäß Fig. 6 veranschaulicht den zeitlichen Verlauf einiger Zustandsgrößen der Antriebshydraulik gemäß Fig. 1 (Stand der Technik) während des Umsteuervorgangs der Hauptpumpe 10. Den in dem Diagramm im Einzelnen bezeichneten zeitabhängigen Kurven: Schwenkwinkel, Druck im Anschlussstrang A und B, Speisedruck, Spülölmenge ist jeweils eine eigene Ordinatenskala zugeordnet.

Bei dem in Fig. 6 gezeigten Messausschnitt endet der letzte Pumphub im Zeitpunkt 76,52 sec. Bis dahin arbeitet der Anschlussstrang B unter Hochdruck (HD-B) und der Anschlussstrang A unter Niederdruck (ND-A). Sodann wird der Schwenkwinkel der Schwenkscheibe mit hoher Geschwindigkeit in der Zeit zwischen 76,52 und 76,57 sec durch die Nulllage hindurch und bis zum Zeitpunkt 76,67 zu einem Push-Over-Punkt bei etwa 12 mm geschwenkt. Nahezu ohne Verzögerung steigt der Niederdruck auf der Anschlussseite A zunächst steil an, während der Hochdruck auf der Seite B erwartungsgemäß abfällt. Auffallend ist, dass mit dem Anstieg des Niederdrucks vom Beginn des Umsteuervorgangs an ein sehr hoher Spülölstrom einsetzt, der einen weit über den zeichnerisch erfassten Maßstab hinausgehenden Peak in der Zeit zwischen 76,52 und 76,83 sec zeigt. Dadurch steht für den Druckaufbau auf der neuen Niederdruckseite B nicht genügend Öl zur Verfügung, um über die Hauptpumpe einen ausreichenden Druck auf der neuen Hochdruckseite A aufzubauen. Es kommt zu einem Niederdruckeinbruch im Strang B der im Zeitraum 76,77 bis 76,81 sec vollkommen bis Null absinkt. Eine Folge hiervon sind Kavitationserscheinungen im Bereich der Hauptpumpe. Da auch der Speisedruck auf Werte unter 10 bar (statt 30 bar) abfällt, kann-es auch dort zu Pumpenschlägen kommen. Eine Folge hiervon sind erhebliche Druckschwankungen auch im Bereich der neuen Hochdruckseite A, die zu verschleißfördernden Druckschlägen im Pumpenbereich führen.

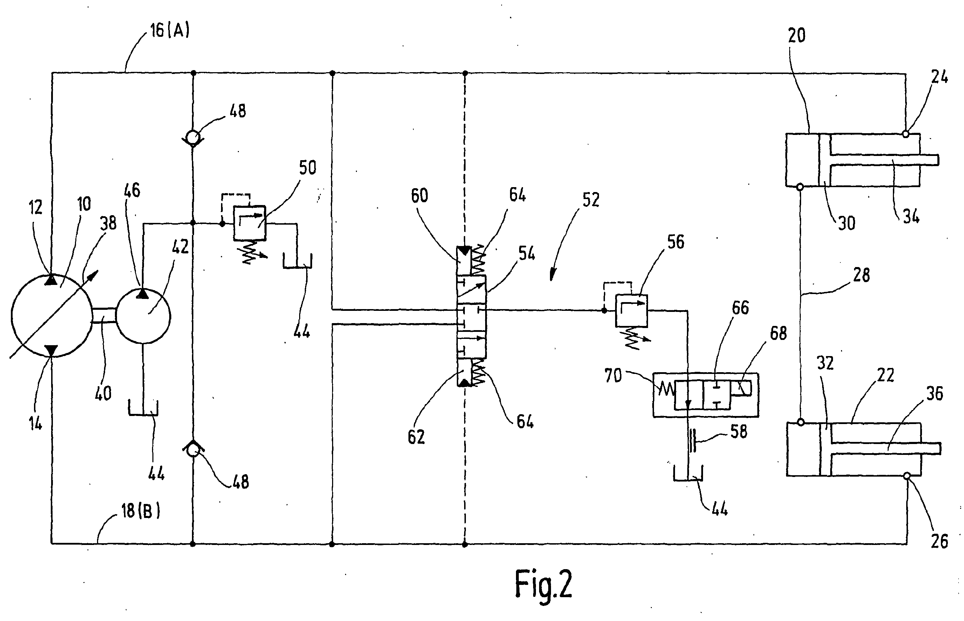

Um die aus dem Diagramm nach Fig. 6 ersichtlichen Nachteile beim herkömmlichen Betrieb der Antriebshydraulik zu vermeiden, sind bei den in Fig. 2 bis 5 schematisch dargestellten Ausführungsbeispielen Vorkehrungen getroffen, mit denen der gefährliche Niederdruckeinbruch eliminiert werden kann. In allen vier Ausführungsvarianten wird der Spülölstrom während des Umsteuervorgangs mit Hilfe eines geeigneten Sperrmechanismus unterbrochen.

Bei dem Ausführungsbeispiel nach Fig. 2 befindet sich im Spülzweig 52 hinter dem Niederdruckbegrenzungsventil 56 ein den Sperrmechanismus bildendes Einweg-Sperrventil 66, dessen Steuereingang 68 vor jedem Umsteuervorgang über ein durch den ankommenden Kolben 30 bzw. 32 ausgelöstes Endlagensignal ausgelöst wird. Die Auslösung bewirkt eine Verschiebung des Sperrventilschiebers entgegen der Kraft der Verstellfeder 70 in die Sperrstellung. Ein nicht dargestelltes Zeitglied oder ein weiteres Auslösesignal stellt das Sperrventil 66 wieder in die in Fig. 2 gezeigte Durchgangsstellung, in welcher der Spülölstrom von der momentanen Niederdruckseite zum Öltank 44 in Gang gesetzt wird.

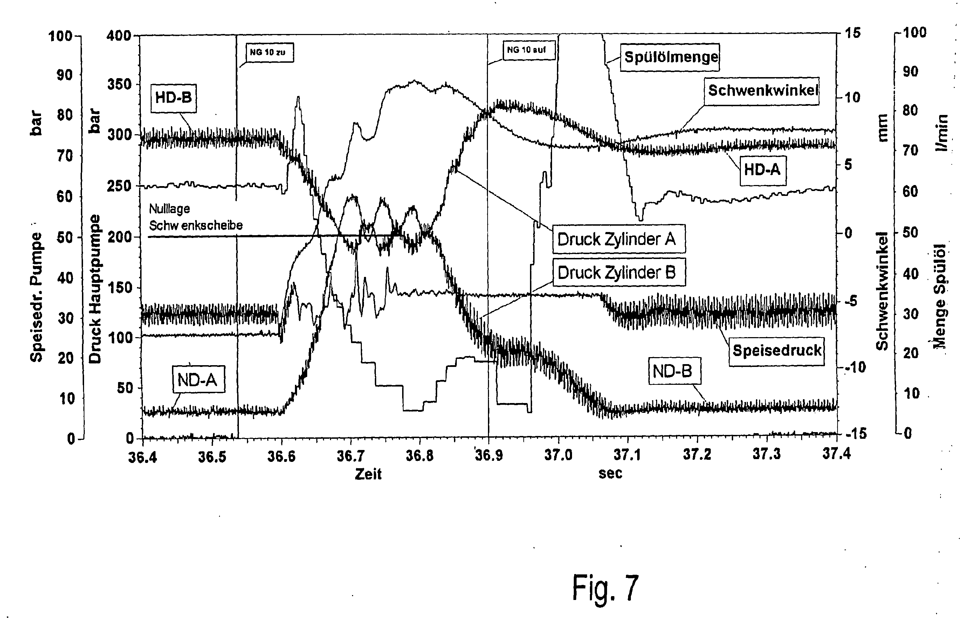

Die Wirkung des Sperrventils 66 lässt sich anhand des in Fig. 7 gezeigten Diagramms verdeutlichen. In diesem Diagramm sind die beiden Zeitpunkte 36,54 sec und 36,90 sec erkennbar, in welchen das Sperrventil 66 geschlossen und wieder aufgemacht wird. Das Schließen des Sperrventils beginnt einige Zehntel Sekunden vor dem Beginn des Umsteuervorgangs im Zeitpunkt 36,60 sec. Wegen der Trägheit des Systems kommt es beim Anstieg des Niederdrucks im Anschlussstrang A noch zu einem kleinen Peak im Spülölstrom, der jedoch rasch abklingt und durch etwas früheres Schließen des Sperrventils verhindert werden könnte. Deutlich erkennbar ist jedoch, dass die Ölmenge der Speisepumpe hier ausreicht, einen Druckeinbruch auf der Niederdruckseite zu vermeiden. Auch der Speisedruck bleibt nahezu konstant. Die Niederdruckseite bleibt über dem gesamten Umschaltvorgang ausreichend vorgespannt, so dass der Druckaufbau auf der Hochdruckseite mit einem ausreichenden Push-Over-Effekt (Peak) in der HD-A-Kurve zwischen 36,9 und 37,0 sec erfolgen kann. Wegen des beim Öffnen des Sperrventils 66 im Strang B noch vorhandenen erhöhten Niederdrucks kommt es zu einem kurzzeitigen Überschwung in der Spülölmenge, der an dieser Stelle jedoch keine Auswirkung auf den Druckaufbau in den Anschlusssträngen hat. Eine Verschiebung der Öffnungszeit des Sperrventils zu einem später liegenden Zeitpunkt könnte diese Spülölmenge erforderlichenfalls noch etwas reduzieren.

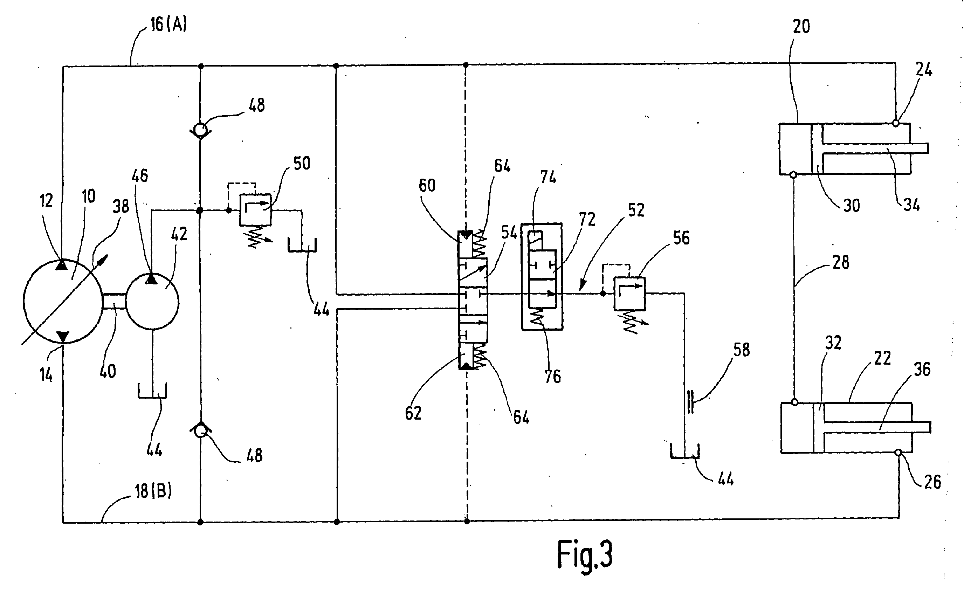

In den Fig. 3, 4 und 5 sind weitere Ausführungsvarianten für einen Absperrmechanismus im Spülölzweig schematisch dargestellt, die im Ergebnis einen ähnlichen Effekt wie das Ausführungsbeispiel nach Fig. 2 im zeitlichen Verlauf der Zustandsparameter im Sinne der Fig. 7 ergeben.

So ist bei dem in Fig. 3 gezeigten Ausführungsbeispiel ein Einwege-Sperrventil 72 gleicher Bauart wie in Fig. 2 im Spülölzweig zwischen dem Wechselventil 54 und dem Begrenzungsventil 56 angeordnet. Voraussetzung hierfür ist, dass die Teile 54 und 56 getrennte Bauelemente sind, zwischen denen noch Platz für dass Sperrventil 72 ist. Das Sperrventil 72 wird über den Steuereingang 74 entgegen der Kraft der Rückstellfeder 76 in seine Sperrstellung gebracht.

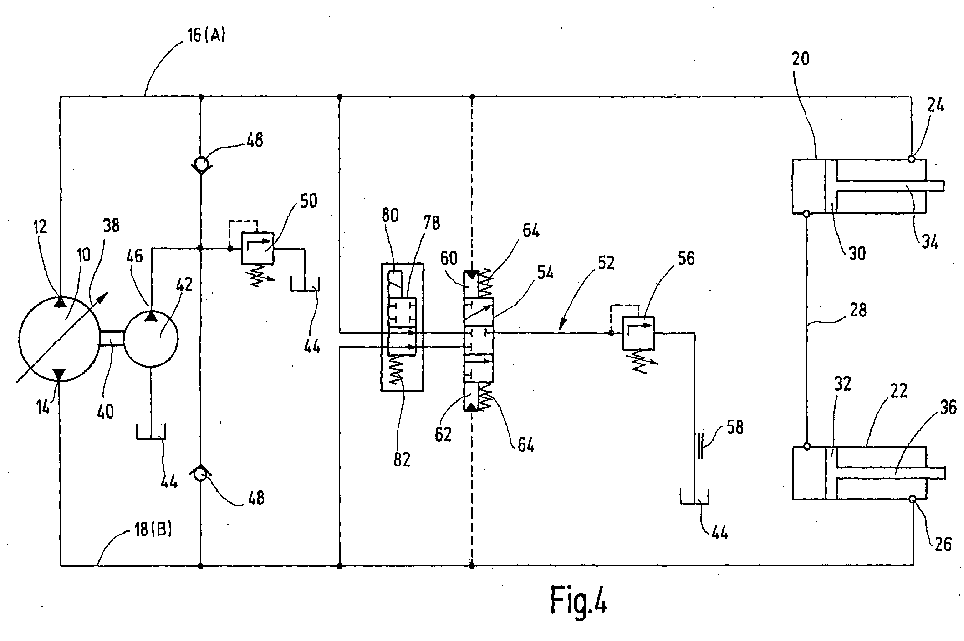

Auch im Falle der Fig. 4 befindet sich im Spülzweig 52, diesmal vor dem Wechselventil 54 ein Zweiwege-Sperrventil 78 das eingangsseitig mit den beiden Anschlusssträngen 16 und 18 verbunden ist. Ähnlich wie im Falle der Fig. 2 und 3 wird auch dieses Sperrventil über einen Steuereingang 80 entgegen der Kraft einer Feder 82 zu Beginn des Umsteuervorgangs in den Sperrzustand versetzt und nach Ablauf einer vorgegebenen Zeit über die Feder 82 in seine Durchgangsposition zurückgestellt.

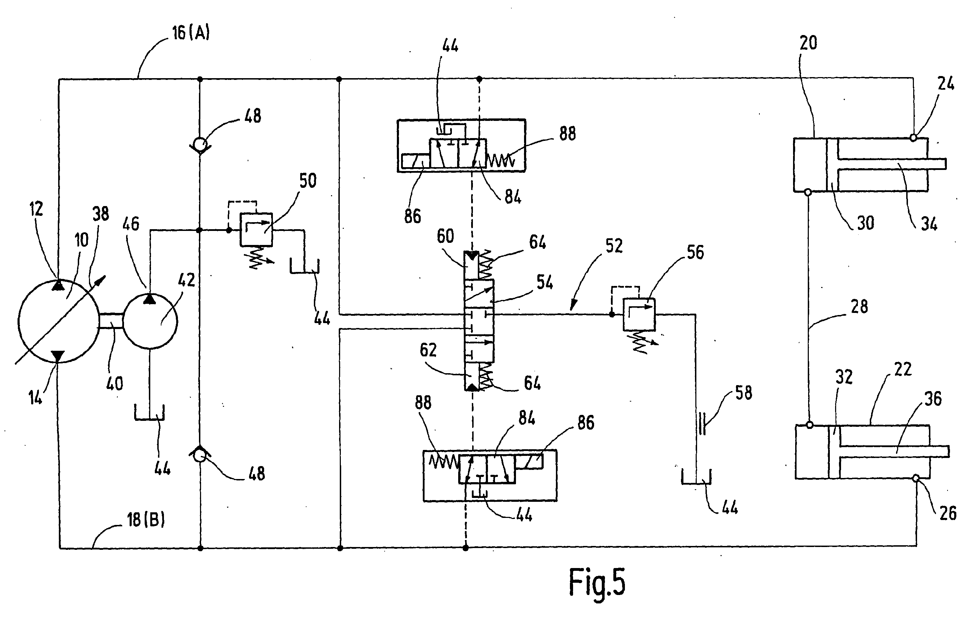

Bei dem in Fig. 5 gezeigten Ausführungsbeispiel wird die Sperrfunktion in der Mittelstellung des Wechselventils 54 zur Absperrung des Spülzweigs ausgenutzt. Zu diesem Zweck sind in den Vorsteuerleitungen des Wechselventils 54 Druckentlastungsventile 84 angeordnet, die über die Steuereingänge 86 ansteuerbar sind und dabei entgegen der Kraft einer Rückholfeder 88 das Wechselventil in seine differenzdruckneutrale Mittelstellung bringen, in welcher der Spülzweig 52 gesperrt wird. Die Deaktivierung der Druckentlastungsventile erfolgt wiederum zeitverzögert, nachdem die Hauptpumpe 10 mit seiner Schwenkscheibe 38 in die entgegengesetzte Förderrichtung umgesteuert worden ist.

Zusammenfassend ist folgendes festzuhalten: Die Erfindung bezieht sich auf einen Hydraulikantrieb, insbesondere für Zweizylinder-Dickstoffpumpen. Der Hydraulikantrieb umfasst mindestens eine als hydraulische Verstellpumpe ausgebildete Hauptpumpe 10 sowie zwei hydraulisch betätigbare Antriebszylinder 20,22, die über an ihrem einen Ende angeordnete Pumpenanschlüsse unter Bildung eines geschlossenen Hydraulikkreises mit je einem Anschlussstrang 16,18 der Hauptpumpe 10 verbunden sind und an ihren den Pumpenanschlüssen 24,26 gegenüberliegenden Enden über eine Schaukelölleitung 28 miteinander kommunizieren. Der Hydraulikantrieb umfasst ferner eine Speisepumpe 42, mit welcher Drucköl aus einem Öltank auf der augenblicklichen Niederdruckseite in den Hydraulikkreis eingespeist; sowie einen Spülzweig 52, über den ein Spülölstrom von der augenblicklichen Niederdruckseite unter begrenztem Druck in den Öltank 44 abgezweigt. wird. Um Niederdruckeinbrüche während des Umsteuervorgangs der Hauptpumpe 10 zu vermeiden, wird der Spülölstrom während eines jeden Umsteuervorgangs der Hauptpumpe 10 unabhängig vom Differenzdruck in den Anschlusssträngen gesperrt und zeitverzögert wieder freigegeben.

## Patentansprüche

1. Hydraulikantrieb, insbesondere für Zweizylinder-Dickstoffpumpen, bei welchem abwechselnd zwei Antriebszylinder (20,22) gegensinnig über Anschlussstränge (16,18) mindestens einer als Verstellpumpe ausgebildeten Hauptpumpe (10) in geschlossenem Hydraulikkreis mit Drucköl unter Hoch- und Niederdruck (HD,ND) beaufschlagt sind, bei welchem ein Frischölstrom aus einem Öltank (44) unter begrenztem Druck auf der augenblicklichen Niederdruckseite in den Hydraulikkreis einspeist und bei welchem ein Spülölstrom von der augenblicklichen Niederdruckseite in den Öltank abzweigt, **dadurch gekennzeichnet, dass** der Spülölstrom während eines jeden Umsteuervorgangs der Hauptpumpe (10) unabhängig von der Druckdifferenz in den Anschlusssträngen (16,18) der Hauptpumpe (10) zeitweilig gesperrt ist.

2. Hydraulikantrieb nach Anspruch 1 mit zwei hydraulisch betätigbaren, als Kolben-Zylinder-Einheiten ausgebildeten Antriebszylindern (20,22), die über an ihrem einen Ende angeordnete Pumpenanschlüsse (24,26) unter Bildung des geschlossenen Hydraulikkreises mit je einem Anschlussstrang (16,18) der Hauptpumpe (10) verbunden sind, und die an ihren den Pumpenanschlüssen (24,26) gegenüberliegenden Enden über eine Schaukelölleitung (28) miteinander kommunizieren, wobei die Hauptpumpe (10) mit einem Steuermechanismus zum alternierenden Umsteuern der Förderrichtung unter abwechselndem gegensinningem Aufbau eines Hochdrucks (HD) und eines Niederdrucks (ND) in den beiden Anschlusssträngen (16,18) verbunden ist, mit einer hydraulischen Speisepumpe (42), deren Saugeingang an einen Öltank (44) angeschlossen und deren Druckausgang (46) auf Niederdruckniveau begrenzt ist und über je ein Rückschlagventil (48) in die beiden Anschlussstränge (16,18) der Hauptpumpe (10) mündet, und mit einem im Hydraulikkreis integrierten Spülzweig (52), der austrittsseitig unter Zwischenschaltung eines Druckbegrenzungsventils (56) in den Öltank (44) mündet und eintrittsseitig über ein durch den zwischen den Anschlusssträngen (16,18) herrschenden Differenzdruck vorgesteuertes Wechselventil (54) bei vorhandenem Differenzdruck unter Ausschleusen des Spülölstroms in den Öltank zum jeweils niederdruckseitigen Anschlussstrang durchgesteuert und vorzugsweise in seiner differenzdruckneutralen Mittellage gesperrt ist, **gekennzeichnet durch** einen Absperrmechanismus (66;7;78;84), der den Spülölstrom während des Umsteuervorgangs der Hauptpumpe (10) unabhängig vom Differenzdruck zwischen den Anschlusssträngen (16,18) zeitweilig sperrt.

3. Hydraulikantrieb nach Anspruch 1 oder 2, **dadurch gekennzeichnet, dass** der Absperrmechanismus auf ein die Umsteuerung der Hauptpumpe (10) auslösendes Steuersignal unter Aktivierung eines Sperrvorgangs anspricht.

4. Hydraulikantrieb nach Anspruch 2 oder 3, **dadurch gekennzeichnet, dass** der Absperrmechanismus zeitverzögert nach Ablauf des Umsteuervorgangs deaktiviert wird.

5. Hydraulikantrieb nach einem der Ansprüche 2 bis 4, **dadurch gekennzeichnet, dass** der Absperrmechanismus auf ein Zeitverzögerungsglied oder ein im Anschluss an einen Umsteuervorgang des Hauptventils (10) erzeugtes Steuersignal unter Deaktivierung der Sperrung anspricht.

6. Hydraulikantrieb nach einem der Ansprüche 1 bis 5, **dadurch gekennzeichnet, dass** an mindestens zwei Enden der Antriebszylinder (20,22) ein auf einen Kolbendurchgang ansprechender Positionsgeber zur Abgabe eines Steuersignals angeordnet ist.

7. Hydraulikantrieb nach einem der Ansprüche 2 bis 6, **dadurch gekennzeichnet, dass** der Absperrmechanismus ein im Spülzweig (52) hinter dem Druckbegrenzungsventil (56) angeordnetes Absperrventil (66) aufweist.

8. Hydraulikantrieb nach einem der Ansprüche 2 bis 6, **dadurch gekennzeichnet, dass** der Absperrmechanismus ein im Spülzweig (52) zwischen dem Wechselventil (54) und dem Druckbegrenzungsventil (56) angeordnetes Absperrventil (72) aufweist.

9. Hydraulikantrieb nach einem der Ansprüche 2 bis 6, **dadurch gekennzeichnet, dass** der Absperrmechanismus ein im Spülzweig (52) vor dem Wechselventil (54) angeordnetes Sperrventil (78) aufweist.

10. Hydraulikantrieb nach einem der Ansprüche 2 bis 6, **dadurch gekennzeichnet, dass** der Absperrmechanismus je ein in den beiden mit den Anschlusssträngen (16,18) verbundenen Vorsteuerleitungen des Wechselventils (54) angeordnetes Druckentlastungsventil (84) aufweist.

11. Hydraulikantrieb nach einem der Ansprüche 6 bis10, **dadurch gekennzeichnet, dass** die Sperr- und/oder Druckentlastungsventile (66,72,78, 84) als in Durchlassrichtung federbelastete und in Sperr- oder Druckentlastungsrichtung signalgesteuerte Wegeventile ausgebildet sind.

12. Verfahren zur Ansteuerung von Hydraulikantrieben, insbesondere für Zweizylinder-Dickstoffpumpen, bei welchem abwechselnd zwei Antriebszylinder (20,22) gegensinnig über die Anschlussstränge (16,18) mindestens einer als Verstellpumpe ausgebildeten Hauptpumpe (10) in geschlossenem Hydraulikkreis mit Drucköl beaufschlagt werden, bei welchem Frischöl aus einem Öltank unter begrenztem Druck auf der augenblicklichen Niederdruckseite in den Hydraulikkreis eingespeist wird und bei welchem ein Spülölstrom von der augenblicklichen Niederdruckseite unter begrenztem Druck in den Öltank abgezweigt wird, **dadurch gekennzeichnet, dass** der Spülölstrom während eines jeden Umsteuervorgangs der Hauptpumpe (10) unabhängig vom Differenzdruck in den Anschlusssträngen (16,18) der Hauptpumpe (10) zeitweilig gesperrt und anschließend wieder freigegeben wird.

## Claims

1. Hydraulic drive, in particular for two-cylinder thick matter pumps, in which two drive cylinders (20, 22) in a closed hydraulic circuit are alternatingly acted upon in counter-stroke with high and low pressure hydraulic fluid (HP, LP), wherein a fresh stream of oil is fed with limited pressure from an oil tank (44) into the side which is currently the low pressure side of hydraulic circuit, and wherein a flushing oil stream is branched off from the current low pressure side discharging into the oil tank, thereby **characterized, that** during each reversal process of the main pump (10) the flushing oil stream is blocked for a period of time independent of the pressure differential in the connection lines (16, 18) of the main pump (10).

2. Hydraulic drive according to claim 1, in which two hydraulic actuated drive cylinders (20,22) embodied as piston cylinder units are connected, via pump connections (24, 26) provided at their one cylinder end, with respectively one connection line (16, 18) of the main pump (10), forming a closed hydraulic circuit, and which on their cylinder ends opposite to the pump connections (24, 26) communicate with each other via an oscillating hydraulic line (28), wherein the main pump (10) is connected with a control mechanism for alternatingly reversing the conveyance direction of the hydraulic fluid, alternatively building up a high pressure (HP) and a low pressure (LP) in the two connection lines (16, 18) in counter stroke, with a hydraulic feed pump (42), of which the suction inlet is in communication with an oil tank (44) and of which the pressure outlet (46) is limited to a low pressure level and communicates via a one-way valve (48) with the two connection lines (16, 18) of the main pump (10), and with a flushing branch (52) integrated in the hydraulic circuit, which on the outlet side, with interposition of a pressure limitation valve (56), communicates with the oil tank (44), and on the inlet side is controlled by a control valve (54), which is controlled by the pressure differential existing between the connection lines (16, 18) such that in the case of a pressure differential it opens the connection to the low pressure side to allow discharge a flushing oil stream into the oil tank, and in the case of a pressure differential neutral central position is preferably blocked, **characterized by** a blocking mechanism (66;7;78;84), which temporarily blocks the flushing stream during the reversing process of the main pump (10) independent of the pressure differential prevailing between the connection lines (16, 18).

3. Hydraulic drive according to claim 1 or 2, thereby **characterized, that** the blocking mechanism responds to a main pump (10) reversing control signal as trigger for activation of a blocking process.

4. Hydraulic drive according to claim 2 or 3, thereby **characterized, that** the blocking mechanism is deactivated with time delay after termination of the reversing process.

5. Hydraulic drive according to one of claims 2 through 4, thereby **characterized, that** the blocking mechanism responds by deactivation of blocking to a time delay element or a control signal produced by the reversal of the main valve (10).

6. Hydraulic drive according to one of claims 1 through 5, thereby **characterized, that** on at least two ends of the drive cylinders (20, 22) a position indicator responsive to passage by of a piston is provided for providing a control signal.

7. Hydraulic drive according to one of claims 2 through 6, thereby **characterized, that** the blocking mechanism includes a blocking valve (66) provided in the flushing branch (52) downstream of the pressure limiting valve (56).

8. Hydraulic drive according to one of claims 2 through 6, thereby **characterized, that** the blocking mechanism includes a blocking valve (72) provided in the flushing branch (52) between the reversing valve (54) and the pressure limiting valve (56).

9. Hydraulic drive according to one of claims 2 through 4, thereby **characterized, that** the blocking mechanism includes a blocking valve (78) provided in the flushing branch (52) upstream of the reversing valve (54).

10. Hydraulic drive according to one of claims 2 through 6, thereby **characterized, that** the blocking mechanism includes one pressure relief valve (84) respectively provided in the two pre-control lines of the reversing valve (54) connected with the connecting connection lines (16, 18).

11. Hydraulic drive according to one of claims 6 through 10, thereby **characterized, that** the blocking and/or pressure relief valve (66, 72, 78, 84) is embodied as signal controlled directional valves spring biased in the through-put direction and signal controlled in the blocking or pressure relief direction.

12. Process for controlling hydraulic drives, in particular for two-cylinder thick matter pumps, in which two drive cylinders (20, 22) in a closed hydraulic circuit are alternatingly acted upon with hydraulic fluid under pressure via connecting connection lines (16, 18) of at least one main pump (10) embodied as a reversible pump, in which fresh oil is supplied from an oil tank under limited pressure to the current low pressure side of the hydraulic circuit and in which a flushing stream from the current low pressure side with limited oil pressure is branched off into the oil tank, thereby **characterized, that** the flushing oil stream is temporarily blocked and subsequently again unblocked during each reversing process of the main pump (10) independent of the differential pressure in the connecting connection lines (16, 18) of the main pump (10).

## Revendications

1. Entraînement hydraulique, notamment pour pompes à matière épaisses à deux cylindres, dans le cas duquel deux cylindres d'entraînement (20, 22) sont alternativement sollicités en sens contraires, dans un circuit hydraulique fermé, par du liquide hydraulique à haute et à basse pression (HD, ND) par l'intermédiaire de conduits de raccordement (16, 18) d'au moins une pompe principale (10) réalisée sous forme de pompe à débit variable, dans le cas duquel un flux de liquide neuf provenant d'un réservoir de liquide (44) est alimenté sous une pression limitée dans le circuit hydraulique sur le côté momentanément de basse pression, et dans le cas duquel un flux de liquide de rinçage bifurque dans le réservoir de liquide depuis le côté momentanément de basse pression, **caractérisé en ce que** le flux de liquide de rinçage est, pendant chaque processus d'inversion de la pompe principale (10), temporairement bloqué indépendamment de la différence de pression dans les conduits de raccordement (16, 18) de la pompe principale (10).

2. Entraînement hydraulique selon la revendication 1, avec deux cylindres d'entraînement (20, 22) à actionnement hydraulique réalisés sous la forme d'unités piston-cylindre, qui sont chacun reliés à un conduit de raccordement respectif (16, 18) de la pompe principale (10) par l'intermédiaire de leurs branchements de pompe (24, 26) disposés à une de leurs extrémités, en formant le circuit hydraulique fermé, et qui, à leurs extrémités opposées aux branchements de pompe (24, 26), communiquent entre eux par l'intermédiaire d'une conduite (28) de liquide hydraulique alternant, sachant que la pompe principale (10) est reliée à un mécanisme de commande pour inverser de façon alternée le sens du débit en établissant alternativement en sens contraires une haute pression (HD) et une basse pression (ND) dans les deux conduits de raccordement (16, 18), avec une pompe d'alimentation hydraulique (42) dont l'entrée d'aspiration est raccordée à un réservoir de liquide (44) et dont la sortie de pression (46) est limitée à un niveau de basse pression et débouche par l'intermédiaire d'une soupape anti-retour respective (48) dans chacun des deux conduits de raccordement (16, 18) de la pompe principale (10), et avec une branche de rinçage (52) intégrée dans le circuit hydraulique, qui du côté de sortie débouche dans le réservoir de liquide (44) avec intercalation d'une soupape (56) de limitation de pression, et qui du côté d'entrée, au moyen d'une soupape à deux voies (54) pilotée par la différence de pression régnant entre les conduits de raccordement (16, 18), est en présence d'une différence de pression ouverte vers le conduit de raccordement respectif du côté basse pression en évacuant le flux de liquide de rinçage dans le réservoir de liquide, tandis qu'elle est de préférence bloquée dans sa position médiane à différence de pression neutre, **caractérisé par** un mécanisme de blocage (66 ; 7 ; 78 ; 84) qui bloque temporairement le flux de liquide de rinçage pendant le processus d'inversion de la pompe principale (10) indépendamment de la différence de pression entre les conduits de raccordement (16, 18).

3. Entraînement hydraulique selon la revendication 1 ou 2, **caractérisé en ce que** le mécanisme de blocage réagit en activant un processus de blocage à un signal de commande déclenchant l'inversion de la pompe principale (10).

4. Entraînement hydraulique selon la revendication 2 ou 3, **caractérisé en ce que** le mécanisme de blocage est désactivé avec une temporisation à la suite de l'achèvement du processus d'inversion.

5. Entraînement hydraulique selon l'une des revendications 2 à 4, **caractérisé en ce que** le mécanisme de blocage réagit en désactivant le blocage à un élément temporisateur ou à un signal de commande produit à la suite d'un processus d'inversion de la pompe principale (10).

6. Entraînement hydraulique selon l'une des revendications 1 à 5, **caractérisé en ce qu'**un transmetteur de position réagissant à un passage du piston pour délivrer un signal de commande est disposé en au moins deux extrémités des cylindres d'entraînement (20, 22).

7. Entraînement hydraulique selon l'une des revendications 2 à 6, **caractérisé en ce que** le mécanisme de blocage présente une soupape de blocage (66) disposée après la soupape (56) de limitation de pression dans la branche de rinçage (52).

8. Entraînement hydraulique selon l'une des revendications 2 à 6, **caractérisé en ce que** le mécanisme de blocage présente une soupape de blocage (72) disposée entre la soupape à deux voies (54) et la soupape (56) de limitation de pression dans la branche de rinçage (52).

9. Entraînement hydraulique selon l'une des revendications 2 à 6, **caractérisé en ce que** le mécanisme de blocage présente une soupape de blocage (78) disposée avant la soupape à deux voies (54) dans la branche de rinçage (52).

10. Entraînement hydraulique selon l'une des revendications 2 à 6, **caractérisé en ce que** le mécanisme de blocage présente une soupape de détente respective (84) disposée dans chacune des deux conduites de pilotage de la soupape à deux voies (54) qui sont reliées aux conduits de raccordement (16, 18).

11. Entraînement hydraulique selon l'une des revendications 6 à 10, **caractérisé en ce que** les soupapes (66, 72, 78, 84) de blocage et/ou de détente sont réalisées sous la forme de soupapes à plusieurs voies sollicitées par ressort dans la direction de passage et commandées par signal dans la direction de blocage ou de détente.

12. Procédé d'asservissement d'entraînements hydrauliques, notamment pour des pompes à matières épaisses à deux cylindres, selon lequel deux cylindres d'entraînement (20, 22) sont alternativement sollicités en sens contraires par du liquide hydraulique, dans un circuit hydraulique fermé, par l'intermédiaire des conduits de raccordement (16, 18) d'au moins une pompe principale (10) réalisée sous forme de pompe à débit variable, selon lequel du liquide neuf provenant d'un réservoir de liquide est alimenté sous une pression limitée dans le circuit hydraulique sur le côté momentanément de basse pression, et selon lequel un flux de liquide de rinçage est bifurqué dans le réservoir de liquide sous une pression limitée depuis le côté momentanément de basse pression, **caractérisé en ce que** le flux de liquide de rinçage est, pendant chaque processus d'inversion de la pompe principale (10), temporairement bloqué puis à nouveau débloqué indépendamment de la différence de pression dans les conduits de raccordement (16, 18) de la pompe principale (10).
